# EUROPÄISCHE PATENTANMELDUNG

(11) **EP 2 796 268 A1**
(43) Veröffentlichungstag der Anmeldung: **29.10.2014**
(21) Anmeldenummer: 13165196.0
(22) Anmeldetag: 24.04.2013
(51) Int. Cl.: B29C 45/73, B22D 17/22, B22C 9/06, B29C 35/00

(54) **Vorrichtung und Verfahren zur Temperierung einer Werkzeugform**

(71) Anmelder: Robamat Automatisierungstechnik GmbH, 4810 Gmunden (AT)
(72) Erfinder: Obermair, DI Norbert, 4690 Schwanenstadt (AT); Berghammer, Siegfried, 4030 Linz (AT)
(74) Vertreter: Patentanwälte Ruff, Wilhelm, Beier, Dauster & Partner

(57) **Zusammenfassung**

1. Vorrichtung zur Temperierung einer Werkzeugform.

2.1. Die Erfindung bezieht sich auf eine Vorrichtung zur Temperierung einer Werkzeugform (1), wobei die Temperiervorrichtung einen geschlossenen Temperierfluidkreislauf (2) mit einem Wärmeregenerierabschnitt (2a) zur externen Wärmeabgabe oder Wärmeaufnahme eines im Temperierfluidkreislauf geführten Temperierfluids, einen Temperierabschnitt (2b), in welchem das Temperierfluid in Wärmeübertragungskontakt mit der Werkzeugform oder mit einem Vermittlungsfluid eines Vermittlungsfluidkreislaufs (6) steht, der wärmeübertragend mit der Werkzeugform gekoppelt ist, einen vom Wärmeregenerierabschnitt zum Temperierabschnitt führenden Vorlaufabschnitt (2c) und einen vom Temperierabschnitt zum Wärmeregenerierabschnitt führenden Rücklaufabschnitt (2d) umfasst.

2.2. Bei der erfindungsgemäßen Temperiervorrichtung ist der Temperierfluidkreislauf zur Kühlung der Werkzeugform mittels Unterdruck-Siedekühlung im Temperierabschnitt eingerichtet, wobei Teilfüllungs- und Unterdruckerzeugungsmittel (3, 4) vorgesehen sind, die zur Bereitstellung einer Temperierfluid-Teilfüllung und eines Unterdrucks im Temperierabschnitt eingerichtet sind.

2.3. Verwendung z.B. zur Gießformtemperierung in der Metalldruckgusstechnik und der Kunststoffspritzgießtechnik.

## Beschreibung

Die Erfindung bezieht sich auf eine Vorrichtung und ein Verfahren zur Temperierung einer Werkzeugform, wobei die Temperiervorrichtung einen geschlossenen Temperierfluidkreislauf mit einem Wärmeregenerierabschnitt zur externen Wärmeabgabe oder Wärmeaufnahme eines im Temperierfluidkreislauf geführten Temperierfluids, einen Temperierabschnitt, in welchem das Temperierfluid in Wärmeübertragungskontakt mit der Werkzeugform oder mit einem Vermittlungsfluid eines Vermittlungsfluidkreislaufs steht, der wärmeübertragend mit der Werkzeugform gekoppelt ist, einen vom Wärmeregenerierabschnitt zum Temperierabschnitt führenden Vorlaufabschnitt und einen vom Temperierabschnitt zum Wärmeregenerierabschnitt führenden Rücklaufabschnitt umfasst. Die Vorrichtung und das Verfahren eignen sich insbesondere zur Temperierung einer Gießform, wie sie in der Gießtechnik zum Beispiel beim Metalldruckgießen oder Kunststoffspritzgießen verwendet wird.

Derartige Temperierfluidkreisläufe zur Werkzeugformtemperierung sind allgemein bekannt. Unter Temperierung ist dabei je nach Bedarf und Anwendungsfall eine Kühlung und/oder eine Erwärmung zu verstehen. Das Temperierfluid kann direkt oder unter Zwischenschaltung des Vermittlungsfluids in Wärmeübertragungskontakt mit der Werkzeugform stehen. Im erstgenannten Fall bildet der Temperierfluidkreislauf den Primärkreislauf zur Werkzeugformtemperierung. Im letztgenannten Fall bildet der Vermittlungsfluidkreislauf den Primärkreislauf zur Werkzeugformtemperierung, und der Temperierfluidkreislauf bildet einen Sekundärkreislauf, der mit dem Primärkreislauf wärmeübertragend gekoppelt ist. Als Temperierfluid und als Vermittlungsfluid sind z.B. Wasser, ein Temperieröl und andere Fluide verwendbar, die für Kühl- oder Heizkreisläufe gebräuchlich sind.

Der Begriff Temperierabschnitt bezeichnet vorliegend denjenigen Abschnitt des geschlossenen Temperierfluidkreislaufs, der Wärme von der Werkzeugform bzw. vom Vermittlungsfluid aufnimmt, wenn die Werkzeugform gekühlt werden soll, und/oder Wärme an die Werkzeugform bzw. das Vermittlungsfluid abgeben kann, wenn die Werkzeugform erwärmt werden soll. Der Begriff Wärmeregenerierabschnitt bezeichnet vorliegend denjenigen Abschnitt des Temperierfluidkreislaufs, in welchem das Temperierfluid nach der Wärmeübertragung mit der Werkzeugform bzw. dem Vermittlungsfluid wieder auf eine gewünschte Ausgangstemperatur gebracht wird, bevor es über den Vorlaufabschnitt wieder zum Temperierabschnitt geführt wird. Dazu gibt das Temperierfluid im Wärmeregenerierabschnitt Wärme nach extern ab, wenn die Werkzeugform zu kühlen ist, während sie bei Bedarf Wärme aufnehmen kann, wenn dies für eine Erwärmung der Werkzeugform gewünscht ist.

In der Patentschrift US 4.680.001 ist eine Temperiervorrichtung der eingangs genannten Art offenbart, die alternativ zur ausschließlichen Kühlung oder zur ausschließlichen Beheizung einer Gießform ausgelegt ist. Bei dieser bekannten Vorrichtung bildet der Temperierfluidkreislauf den Primärkreislauf zur Werkzeugformtemperierung, wobei im Vorlaufabschnitt eine Umlaufpumpe und ein Durchflusssteuerventil strömungstechnisch parallel angeordnet sind und der Temperierabschnitt eine sich durch die Gießform hindurch erstreckende Temperierkanalstruktur besitzt. Im Wärmeregenerierabschnitt ist ein Wärmetauscher vorgesehen, der für die Kühlvariante auf einem Niveau über der Gießform und im Fall der Heizvariante auf einem Niveau unterhalb der Gießform angeordnet ist. Der Wärmetauscher ist mit dem Temperierfluid teilbefüllt, wobei im Fall der Kühlvariante eine Vakuumpumpe an einen oberen, unbefüllt bleibenden Teil eines Temperierfluidaufnahmeraumes des Wärmetauschers angekoppelt ist. Hingegen sind der Vorlaufabschnitt und der Rücklaufabschnitt beide an einen Bodenbereich und damit an einen mit dem Temperierfluid befüllten Teil des Temperierfluidaufnahmeraumes angekoppelt. Auf diese Weise sind bei der Kühlvariante der Vorlaufabschnitt, der Temperierabschnitt und der Rücklaufabschnitt stets vollständig mit flüssigem Temperierfluid befüllt.

Die Offenlegungsschrift WO 2012/069998 A1 offenbart eine Vorrichtung zur Temperierung einer Gießform unter Verwendung eines offenen Temperierfluidkreislaufs. Speziell umfasst diese Temperiervorrichtung einen offenen Tank, der ein flüssiges Temperierfluid enthält, einen Primärkreislauf zur Zirkulation des Temperierfluids vom Tank zur zu kühlenden Gießform und von dort über einen Wärmetauscher zurück zum Tank, einen Sekundärkreislauf, der mit dem Primärkreislauf in Verbindung steht und dazu dient, ein gasförmiges Fluid abwechselnd oder in gemischter Form mit dem Temperierfluid durch die zu kühlende Gießform zirkulieren zu lassen. Dazu kann das Gas, insbesondere Luft, über einen Ejektor in den Vorlaufabschnitt des Temperierfluidkreislaufs eingespeist werden. Weiter ist dort ein Vorheizkreislauf für das Temperierfluid vorgesehen, der mit dem Primärkreislauf gekoppelt ist, um heißes, flüssiges Temperierfluid zum Vorheizen der Gießform bereitzustellen.

Weitere herkömmliche Gießform-Temperiervorrichtungen sind z.B. in den Offenlegungsschriften EP 1 772 246 A2, JP 10-034657 A und JP 2002-210740 A sowie den Patentschriften EP 1 110 692 B1 und US 8.043.537 B2 beschrieben.

Der Erfindung liegt als technisches Problem die Bereitstellung einer Vorrichtung und eines Verfahrens der eingangs genannten Art zugrunde, mit der sich eine Werkzeugform, wie eine Gießform, vergleichsweise effektiv und energiesparend temperieren lässt.

Die Erfindung löst dieses Problem durch die Bereitstellung einer Temperiervorrichtung mit den Merkmalen des Anspruchs 1 und eines mit einer solchen Vorrichtung ausführbaren Verfahrens mit den Merkmalen des Anspruchs 14. Bei dieser Temperiervorrichtung ist der Temperierfluidkreislauf zur Kühlung der Werkzeugform mittels Unterdruck-Siedekühlung im Temperierabschnitt eingerichtet. Damit lässt sich eine Werkzeugform sehr effektiv und energiesparend unter Ausnutzung des Siedekühleffektes im Unterdruckbereich kühlen. Um diese Unterdruck-Siedekühlung im Temperierabschnitt bereitzustellen, sind entsprechende Teilfüllungs- und Unterdruckerzeugungsmittel vorgesehen, die dafür sorgen, dass das Temperierfluid im Temperierabschnitt wie gewünscht als Teilfüllung und im Unterdruck vorliegt.

In einer vorteilhaften Weiterbildung der Erfindung beinhalten die Teilfüllungs- und Unterdruckerzeugungsmittel ein im Vorlaufabschnitt angeordnetes Durchflusssteuerventil und/oder eine Vakuumpumpe, die an den Rücklaufabschnitt oder an einen rücklaufseitigen Teil des Wärmeregenerierabschnitts angekoppelt ist. Mit dem Durchflusssteuerventil lässt sich ein gewünschter Teilfüllungsgrad für den dem Vorlaufabschnitt folgenden Temperierabschnitt einstellen. Mit der Vakuumpumpe lässt sich ein gewünschter Unterdruck im Rücklaufabschnitt und damit auch im diesem vorgelagerten Temperierabschnitt bereitstellen.

In Ausgestaltung der Erfindung ist im Vorlaufabschnitt stromaufwärts vom Durchflusssteuerventil eine Umlaufpumpe angeordnet. Mit dieser kann das Temperierfluid in einer kontrollierten Weise im Temperierfluidkreislauf umgewälzt werden, wobei das nachgeschaltete Durchflusssteuerventil die gewünschte Temperierfluid-Teilfüllung im Temperierabschnitt sicherstellt.

In einer Weiterbildung der Erfindung umfasst der Wärmeregenerierabschnitt des geschlossenen Temperierfluidkreislaufs einen Wärmetauscher mit einem Sensor zur Überwachung eines Maximalfüllstandes, unter dessen Niveau ein vorlaufseitiger Teil des Wärmetauschers liegt und über dessen Niveau ein rücklaufseitiger Teil des Wärmetauschers liegt. Mit anderen Worten unterteilt dieser durch entsprechende Platzierung des Sensors vorgebbare Maximalfüllstand einen Temperierfluid-Aufnahmeraum des Wärmetauschers in einen rücklaufseitigen, unteren Teil, der mit flüssigem Temperierfluid befüllbar ist, und einen oberen Teil, in welchem kein flüssiges Temperierfluid vorliegt, sondern allenfalls dampf-/gasförmiges Temperierfluid. Der Vorlaufabschnitt mündet aus dem unteren, vorlaufseitigen Teil des Wärmetauschers aus, d.h. das Temperierfluid wird in flüssiger Form in den Vorlaufabschnitt eingespeist. Hingegen mündet der Rücklaufabschnitt in den oberen Teil des Wärmetauschers ein, so dass eine Unterdruckbereitstellung im Temperierabschnitt über den Rücklaufabschnitt möglich bleibt. Dazu kann beispielsweise die Vakuumpumpe an diesen oberen Teil des Wärmetauschers angekoppelt sein.

In einer Weiterbildung der Erfindung beinhaltet der Temperierabschnitt eine Temperierkanalstruktur in der Werkzeugform, und die Teilfüllungs-/Unterdruckerzeugungsmittel sind zur Teilfüllung dieser Werkzeugform-Temperierkanalstruktur eingerichtet. In dieser Realisierung findet daher die Unterdruck-Siedekühlung sehr effektiv direkt in der Werkzeugform statt.

In einer Weiterbildung der Erfindung weist der Temperierabschnitt einen Wärmetauscher auf, über den der Temperierfluidkreislauf und der Vermittlungsfluidkreislauf wärmeübertragend gekoppelt sind. In dieser Realisierung bildet der Vermittlungsfluidkreislauf den Primärkreislauf für die zu temperierende Werkzeugform, während der Temperierfluidkreislauf einen Sekundärkreislauf bildet, durch den das Vermittlungsfluid im koppelnden Wärmetauscher sehr effektiv und energiesparend mittels Unterdruck-Siedekühlung gekühlt werden kann. Das dergestalt durch das Temperierfluid gekühlte Vermittlungsfluid kühlt dann seinerseits die Werkzeugform.

In einer Weiterbildung der Erfindung ist im Rücklaufabschnitt des Temperierfluidkreislaufs ein Filter angeordnet. Dieser kann beispielsweise als selbstreinigender Filter ausgelegt sein, der störende Verunreinigungen bzw. Partikel aus dem Temperierfluid-Rückstrom herausfiltern kann und so auch als Pumpenschutzfilter zum Schutz einer im Temperierfluidkreislauf angeordneten Pumpe dienen kann.

In einer Weiterbildung der Erfindung ist eine Heizeinrichtung für das Vermittlungsfluid vorgesehen. In weiterer Ausgestaltung dieser Maßnahme kann die Heizeinrichtung in den Temperierabschnitt-Wärmetauscher, über den das Vermittlungsfluid wärmeübertragend mit dem Temperierfluid gekoppelt ist, integriert sein. Mit der Heizeinrichtung lässt sich das Vermittlungsfluid sehr effektiv direkt aufheizen, wenn dies für eine Erwärmung der Werkzeugform gewünscht ist.

In einer Weiterbildung der Erfindung ist eine Heizeinrichtung im Vorlaufabschnitt vorgesehen. Mit dieser lässt sich sehr effektiv das Temperierfluid aufheizen, wenn dies für eine Erwärmung der Werkzeugform gewünscht ist. In einer Ausgestaltung der Erfindung ist diese Temperierfluid-Heizeinrichtung stromabwärts vom Durchflusssteuerventil angeordnet, so dass jeweils nur die vom Durchflusssteuerventil durchgelassene Teilfüllungsmenge an Temperierfluid beheizt wird.

In einer Ausgestaltung der Erfindung beinhaltet die Vermittlungsfluid-Heizeinrichtung und/oder die Temperierfluid-Heizeinrichtung wenigstens einen Keramikheizstab, der von einem zylinderringförmigen oder schraubenlinienförmigen Temperierfluidkanal umgeben ist, so dass das Temperierfluid sehr effektiv in Wärmeübertragungskontakt mit dem Keramikheizstab steht. In weiterer Ausgestaltung ist der Keramikheizstab als ein elektrischer Drei-Phasen-Heizstab ausgeführt, der sehr effektiv mit dreiphasigem Wechselstrom gespeist werden kann.

In einer Ausgestaltung der Erfindung wird Wasser als Temperierfluid und/oder ein Temperieröl als Vermittlungsfluid verwendet. Dies stellt vorteilhafte Möglichkeiten des Einsatzes an sich für derartige Anwendungszwecke bekannter Temperierfluide dar.

Vorteilhafte Ausführungsformen der Erfindung sind in den Zeichnungen dargestellt und werden nachfolgend beschrieben. Hierbei zeigen:
- Fig. 1: eine schematische Darstellung einer Vorrichtung zur Temperierung einer in einem Temperierfluidkreislauf angeordneten Werkzeugform,
- Fig. 2: eine schematische Darstellung einer Vorrichtung zur Temperierung einer Werkzeugform über einen Temperierfluidkreislauf und einen Vermittlungsfluidkreislauf,
- Fig. 3: eine schematische Darstellung der Vorrichtung von Fig. 2 in einer beispielhaften detaillierteren Realisierung,
- Fig. 4: eine Detailansicht eines Wärmeregenerierabschnitts der Vorrichtung von Fig. 3,
- Fig. 5: eine Detailansicht eines Bereichs V von Fig. 4,
- Fig. 6: eine Längsschnittansicht einer z.B. in den Vorrichtungen der Fig. 1 und 2 verwendbaren elektrischen Heizeinrichtung,
- Fig. 7: eine Schnittansicht längs eine Linie VII-VII von Fig. 6,
- Fig. 8: eine Längsschnittansicht eines z.B. in den Fluidkreisläufen der Vorrichtungen von Fig. 1 und 2 verwendbaren Filters,
- Fig. 9: eine Längsschnittansicht einer beispielhaften Realisierung eines in der Vorrichtung von Fig. 2 verwendbaren Wärmetauschers zur Kopplung von Temperierfluidkreislauf und Vermittlungsfluidkreislauf,
- Fig. 10: eine Längsschnittansicht einer z.B. durch die Vorrichtung von Fig. 1 temperierbaren Gießform während einer Heizsituation und
- Fig. 11: eine Schnittansicht entsprechend Fig. 10 während einer Kühlsituation der Gießform.

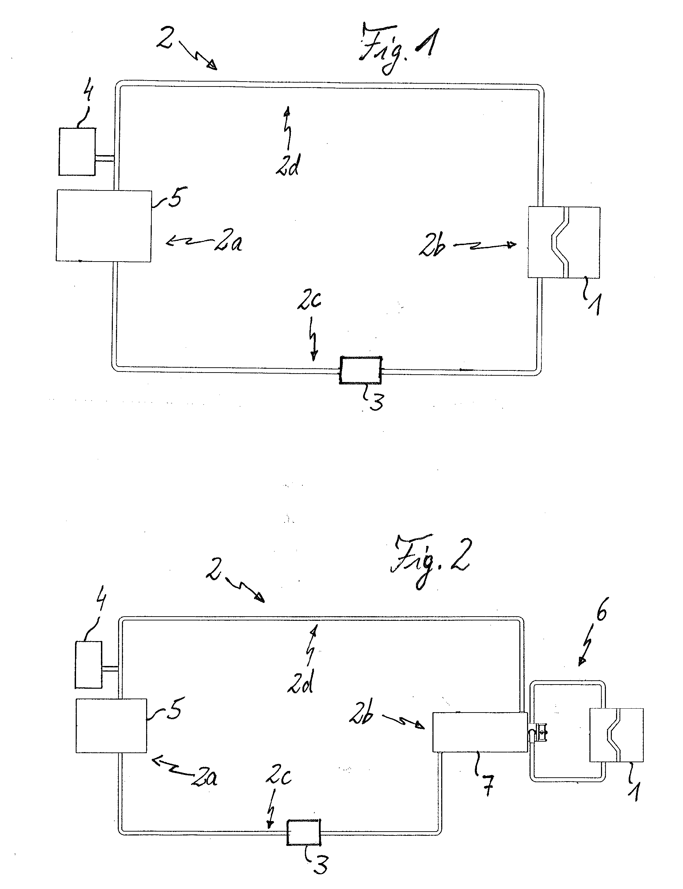

Die in Fig. 1 schematisch dargestellte Vorrichtung dient zur Temperierung einer Werkzeugform 1 mit Hilfe eines geschlossenen Temperierfluidkreislaufs 2. Bei der Werkzeugform 1 kann es sich z.B. um eine Gießform einer Gießanlage handeln, wie einer Metalldruckgießmaschine oder einer Kunststoffspritzgießmaschine. Der Temperierfluidkreislauf 2 umfasst einen Wärmeregenerierabschnitt 2a zur externen Wärmeabgabe oder Wärmeaufnahme eines im Temperierfluidkreislauf 2 geführten Temperierfluids, einen Temperierabschnitt 2b, in welchem das Temperierfluid in Wärmeübertragungskontakt mit der Werkzeugform 1 steht, einen vom Wärmeregenerierabschnitt 2a zum Temperierabschnitt 2b führenden Vorlaufabschnitt 2c und einen vom Temperierabschnitt 2b zum Wärmeregenerierabschnitt 2a führenden Rücklaufabschnitt 2d. Bei dem Temperierfluid kann es sich insbesondere um Wasser oder ein anderes, dem Fachmann für den vorliegenden Temperierzweck an sich bekanntes Temperierfluid handeln.

Der Temperierfluidkreislauf 2 ist zur Kühlung der Werkzeugform 1 mittels Unterdruck-Siedekühlung im Temperierabschnitt 2b eingerichtet. Zusätzlich kann er je nach Bedarf für weitere Temperierbetriebsarten eingerichtet sein, wie zur Kühlung der Werkzeugform mittels Siedekühlung ohne Unterdruck, zur Kühlung der Werkzeugform ohne Siedekühlung und/oder zur Aufheizung der Werkzeugform. Zur Auslegung des Temperierkreislaufs 2, die eine Werkzeugformkühlung mittels Unterdruck-Siedekühlung im Temperierabschnitt 2b ermöglicht, gehört das Vorhandensein von Teilfüllungs- und Unterdruckerzeugungsmitteln, die zur Bereitstellung einer Temperierfluid-Teilfüllung und eines Unterdrucks im Temperierabschnitt 2b eingerichtet sind. Im gezeigten Ausführungsbeispiel von Fig. 1 umfassen diese Teilfüllungs- und Unterdruckerzeugungsmittel ein im Vorlaufabschnitt 2c angeordnetes Durchflusssteuerventil 3 und eine Vakuumpumpe 4, die an den Rücklaufabschnitt 2d oder alternativ an einen rücklaufseitigen Teil des Wärmeregenerierabschnitts 2a angekoppelt ist.

Der Wärmeregenerierabschnitt 2a beinhaltet eine Wärmeregeneriereinrichtung 5, die dafür ausgelegt ist, dem im Temperierkreislauf 2 zirkulierenden Temperierfluid Wärme zu entziehen, wenn die Temperiervorrichtung zur Kühlung der Werkzeugform 1 betrieben wird, und/oder dem Temperierfluid Wärme zuzuführen, wenn die Temperiervorrichtung zur Erwärmung der Werkzeugform 1 betrieben wird. Für die Wärmeregeneriereinrichtung sind verschiedenste Realisierungen möglich, wie sie dem Fachmann für diesen Einsatzzweck an sich bekannt sind.

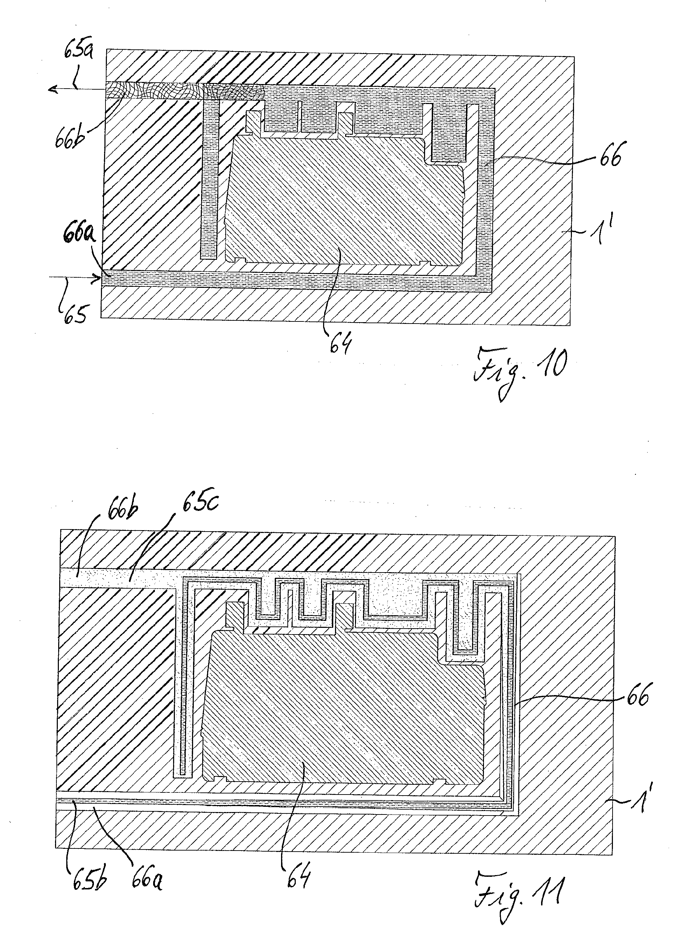

Die Temperierung der Werkzeugform 1 im Temperierabschnitt 2b des Temperierfluidkreislaufs 2 kann beispielsweise dadurch erfolgen, dass die Werkzeugform 1 eine Temperierkanalstruktur beinhaltet, die Bestandteil des Temperierabschnitts 2b des Temperierfluidkreislaufs 2 ist, so dass das Temperierfluid durch die Temperierkanalstruktur in der Werkzeugform 1 hindurchströmt. Vorteilhaft sind in diesem Fall die Teilfüllungs- und Unterdruckerzeugungsmittel 3, 4 zur Teilfüllung dieser Werkzeugform-Temperierkanalstruktur eingerichtet. Dies ermöglicht eine sehr effektive Nutzung des Siedekühlungseffektes zur Werkzeugformkühlung. Die in den Fig. 10 und 11 als zu temperierende Werkzeugform betrachtete Gießform 1' weist eine derartige Temperierkanalstruktur 66 auf.

Fig. 2 zeigt eine Variante der Temperiervorrichtung von Fig. 1, wobei zum leichteren Verständnis für identisch und funktionell äquivalente Elemente gleiche Bezugszeichen verwendet sind und insoweit auf die obigen Erläuterungen zur Fig. 1 verwiesen werden kann. Im Unterschied zur Vorrichtung von Fig. 1 beinhaltet die Temperiervorrichtung von Fig. 2 zusätzlich zum Temperierfluidkreislauf 2 einen Vermittlungsfluidkreislauf 6, mit dem die zu temperierende Werkzeugform bzw. Gießform 1 wärmeübertragend gekoppelt ist und der seinerseits wärmeübertragend mit dem Temperierabschnitt 2b des Temperierfluidkreislaufs 2 gekoppelt ist. Im Vermittlungsfluidkreislauf 6 zirkuliert ein Vermittlungsfluid, das den Wärmeübertrag vom Temperierfluid des Temperierfluidkreislaufs 2 zur Werkzeugform 1 oder umgekehrt von der Werkzeugform 1 zum Temperierfluid vermittelt. Für das Vermittlungsfluid ist jegliches, dem Fachmann für diesen Einsatzzweck an sich bekannte Fluid verwendbar, insbesondere ein geeignetes Temperieröl. Im gezeigten Beispiel ist dient zur wärmeübertragenden Kopplung von Temperierfluid und Vermittlungsfluid, d.h. von Temperierkreislauf 2 und Vermittlungsfluidkreislauf 6, ein zugehöriger Temperierfluid/Vermittlungsfluid-Wärmetauscher 7. Analog zur oben geschilderten Einkopplung der Werkzeugform 1 in den Temperierfluidkreislauf 2 kann die zu temperierende Werkzeugform 1 bei der Vorrichtung von Fig. 2 eine Kanalstruktur beinhalten, mit der sie wärmeübertragend in den Vermittlungsfluidkreislauf 6 eingekoppelt ist.

Bei der Temperiervorrichtung von Fig. 2 erfolgt die Temperierung der Werkzeugform 1 folglich dadurch, dass im zugehörigen Wärmetauscher 7 Wärme zwischen dem Temperierfluid und dem Vermittlungsfluid übertragen wird und die Werkzeugform 1 durch das Vermittlungsfluid temperiert wird.

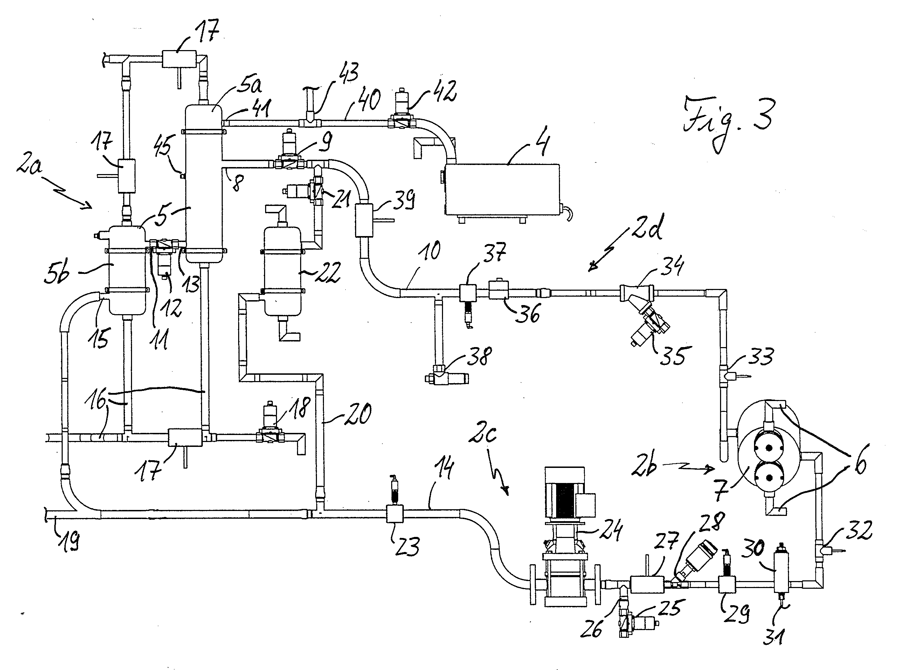

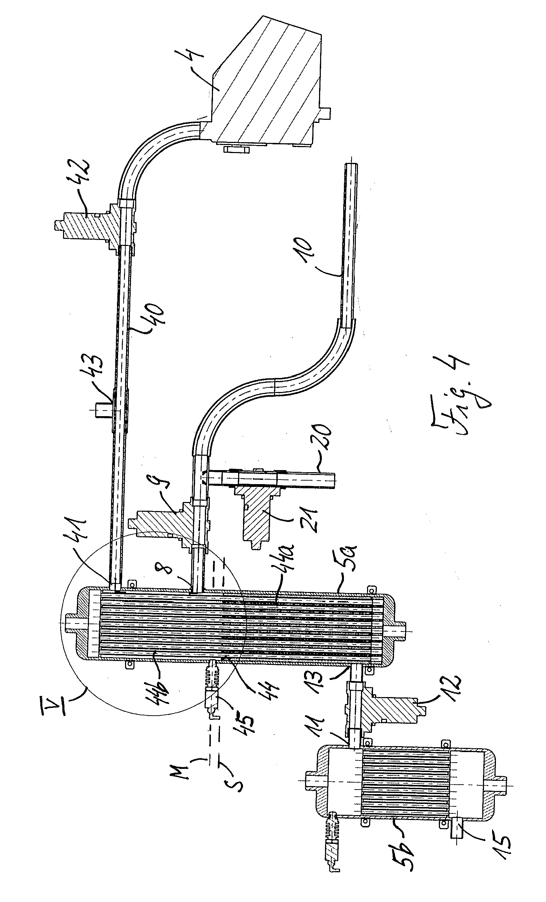

Fig. 3 veranschaulicht die Temperiervorrichtung von Fig. 2 in einer beispielhaften praktischen Umsetzung. Wie aus Fig. 3 ersichtlich, beinhaltet die Wärmeregeneriereinrichtung 5 des Wärmeregenerierabschnitts 2a in diesem Beispiel eine zweistufige Wärmetauscheranordnung mit zwei seriell im Temperierfluidkreislauf 2 angeordneten Wärmetauschern 5a, 5b, wie sie in der Schnittansicht von Fig. 4 detaillierter dargestellt ist. Ein erster, stromaufwärtiger Wärmetauscher 5a ist mit einem Temperierfluideinlass 8 über ein Magnetventil 9 an eine Rücklaufleitung 10 angeschlossen, die den Rücklaufabschnitt 2d des Temperierfluidkreislaufs 2 bildet. Ein stromabwärtiger, zweiter Wärmetauscher 5b ist mit einem Temperierfluideinlass 11 über ein Magnetventil 12 an einen Temperierfluidauslass 13 des ersten Wärmetauschers 5a angeschlossen. Eine Vorlaufleitung 14, die den Vorlaufabschnitt 2c des Temperierfluidkreislaufs 2 bildet, führt von einem Temperierfluidauslass 15 des zweiten Wärmetauschers 5b ab. Beide Wärmetauscher 5a, 5b sind andererseits parallel in eine Temperierfluidstrecke 16 eingeschleift, bei der es sich z.B. um einen geschlossenen oder offenen Kühlkreislauf mit Wasser als Kühlmittel handeln kann. In der hier nicht weiter interessierenden und daher nur teilweise gezeigten Temperierfluidstrecke 16 sind in üblicher Weise Temperatursensoren 17 und Ventile, von denen hier nur ein Ablassventil 18 gezeigt ist, angeordnet. Über eine hier nur ansatzweise gezeigte Zuleitung 19 kann Temperierfluid in die Vorlaufleitung 14 eingespeist werden.

Eine Bypassleitung 20 führt unter Umgehung der Wärmetauscher 5a, 5b von der Rücklaufleitung 10 vor dem Magnetventil 9 direkt zur Vorlaufleitung 14 und beinhaltet ein Bypassventil 21 und einen Bypass-Wärmetauscher 22. Die Bypassleitung 20 wird insbesondere während Werkzeugform-Aufheizvorgängen aktiviert, so dass das Temperierfluid nicht von den Wärmetauschern 5a, 5b abgekühlt wird. Im Bypass-Wärmetauscher 22 kann das Temperierfluid bei Bedarf unter Einsatz eines entsprechenden Heizfluids aufgeheizt werden.

In der Vorlaufleitung 14 sind seriell nacheinander ein Drucksensor 23, eine Umlaufpumpe 24, ein Zulauf mit Magnetventil 25 und Rückschlagventil 26, ein Temperatursensor 27, ein Durchflusssteuerventil 28 in Form eines entsprechenden pneumatischen oder elektrischen Regelventils oder einer Drossel, ein weiterer Drucksensor 29, eine Temperierfluid-Heizeinrichtung 30 mit integriertem Temperatursensor 31 und ein weiterer Temperatursensor 32 angeordnet. Die Vorlaufleitung 14 mündet in den Temperaturfluid/Nermittlungsfluid-Wärmetauscher 7, der beispielsweise als Wasser/Öl-Wärmetauscher ausgeführt sein kann, wenn Wasser als Temperierfluid und Öl als Vermittlungsfluid verwendet werden.

In der Rücklaufleitung 10 sind nach Ausmündung aus dem Wärmetauscher 7 seriell nacheinander ein Temperatursensor 33, ein Schmutzfilter 34 mit zugehörigem Spülabzweig-Magnetventil 35, ein Durchflusssensor 36, ein Drucksensor 37, ein Sicherheitsventil-Abzweig 38, ein Temperatursensor 39 und das bereits erwähnte Magnetventil 9 vor dem Temperierfluideinlass 8 des Wärmetauschers 5a angeordnet.

Die Vakuumpumpe 4 ist über eine Stichleitung 40 an einen Evakuieranschluss 41 des Wärmetauschers 5a angekoppelt. In der Stichleitung 40 sind ein Magnetventil 42 und ein Abzweig 43 angeordnet, über den bei Bedarf eine Verbindung mit der Temperierfluidstrecke 16 bzw. einem zu dieser gehörigen Temperierkreislauf hergestellt werden kann.

Die Vakuumpumpe 4 ist ebenso wie das Durchflusssteuerventil 28 Bestandteil der Teilfüllungs- und Unterdruckerzeugungsmittel in dieser beispielhaften Systemauslegung von Fig. 3. In einer entsprechenden Betriebsart ist der Temperierfluidkreislauf 2 zur Kühlung der Werkzeugform 1 mittels Unterdruck-Siedekühlung im Temperierabschnitt 2b eingerichtet, wozu insbesondere die Teilfüllungs- und Unterdruckerzeugungsmittel geeignet so eingerichtet sind, dass im Temperierabschnitt 2b ein Unterdruck und eine Temperierfluid-Teilfüllung bereitgestellt werden kann. Dies beinhaltet eine entsprechende konstruktive Auslegung und systemtechnische Ansteuerung insbesondere auch der Vakuumpumpe 4 und des Durchflusssteuerventils 28, wie es sich für den Fachmann zur Durchführung einer Unterdruck-Siedekühlung versteht. Außerdem umfasst dies im Ausführungsbeispiel von Fig. 3 eine spezielle Auslegung des Wärmetauschers 5a und der Ankopplung der Vakuumpumpe 4 an selbigen.

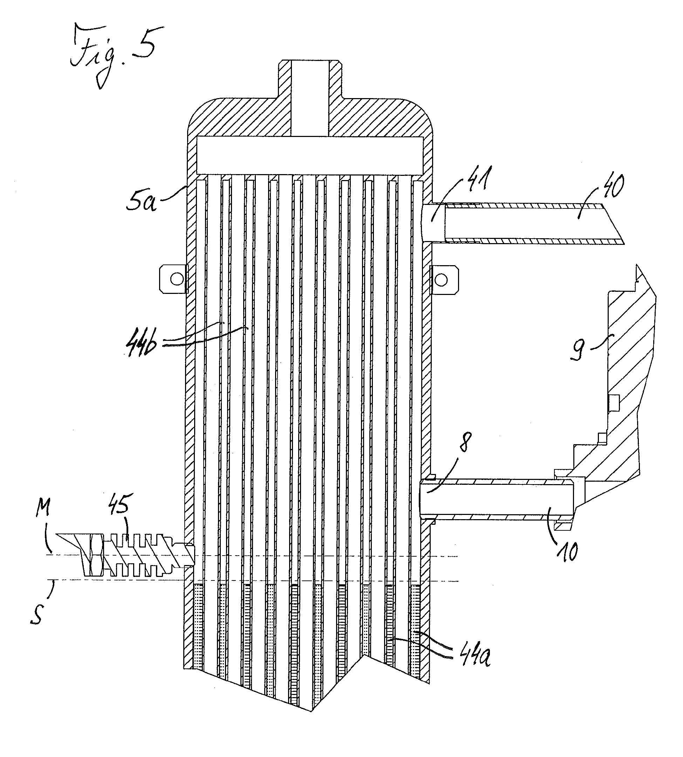

Wie aus den Fig. 4 und 5 detaillierter zu erkennen, definiert der erste Wärmetauscher 5a im Inneren seines Gehäuses einen Wärmeübertragungsraum 44, aus dessen unterem Bereich der Temperierfluidauslass 13 ausmündet, während der Evakuieranschluss 41 in einem oberen Endbereich mündet. Der Temperierfluideinlass 8 befindet sich auf einem Niveau, das zwischen dem Niveau des Temperierfluidauslasses 13 und dem Niveau des Evakuieranschlusses 41 mit geringem Abstand über einem Maximalfüllstandsniveau M des Wärmeübertragungsraums 44 liegt, das durch die entsprechende Lage eines am Gehäuse des Wärmeübertragers 5a angeordneten Füllstandssensor 45 definiert ist. Mindestens für die Betriebsart mit Unterdruck-Siedekühlung wird durch die Teilfüllungs- und Unterdruckerzeugungsmittel dafür gesorgt, dass das Temperierfluid im Wärmeübertragungsraum 44 des Wärmetauschers 5a nur bis zu einem Betriebsniveau S in flüssiger Form vorliegt, das den Maximalfüllstand M nicht überschreitet, der vom Füllstandssensor 45 überwacht wird. Dazu gehört eine entsprechende Ansteuerung der Vakuumpumpe 4 und des Durchflusssteuerventils 28 sowie eine entsprechende Steuerung des Füllungsgrades des Temperierfluidkreislaufes 2 mit dem Temperierfluid. Somit teilt der vom Füllstandssensor 45 definierte Maximalfüllstand M den Wärmeübertragungsraum 44 in einen vorlaufseitigen, unteren Wärmetauscherteil 44a, in dem das Temperierfluid während der Unterdruck-Siedekühlung in flüssiger Form vorliegen kann, und einen darüberliegenden, rücklaufseitigen Wärmetauscherteil 44b, in welchem das Temperierfluid bei der Unterdruck-Siedekühlung dampf-/gasförmig vorliegt.

Der Temperierfluideinlass 8 mündet ebenso wie der Evakuieranschluss 41 in diesen obenliegenden Dampf-/Gasraum 44b des Wärmeübertragungsraums 44 oberhalb des Maximalfüllstandsniveaus M. Dies hat zur Folge, dass die Vakuumpumpe 4, die über die Stichleitung 40 an den rücklaufseitigen Teil des Wärmeregenerierabschnitts 2a des Temperierfluidkreislaufs 2 angekoppelt ist, hier speziell an den Dampf-/Gasraum des Wärmetauschers 5a, ihre Evakuierwirkung über den Dampf-/Gasraum des Wärmeübertragers 5a in die Rücklaufleitung 10, d.h. den Rücklaufabschnitt 2d des Temperierfluidkreislaufs 2, und damit bis in den Temperierabschnitt 2b, hier speziell den Wärmetauscher 7, entfalten kann. In der Betriebsart mit Unterdruck-Siedekühlung lässt sich somit durch die Vakuumpumpe 4 ein Unterdruck insbesondere auch im Temperierabschnitt 2b des Temperierfluidkreislaufs 2 erzeugen und aufrechterhalten. Dies ermöglicht eine sehr effektive Kühlung der Werkzeugform 1 mittels Unterdruck-Siedekühlung im Temperierabschnitt 2b, sei es wie im Fall der Systemauslegung der Fig. 2 und 3 indirekt über den Vermittlungsfluidkreislauf 6 oder alternativ in der Systemauslegung von Fig. 1 direkt durch den Temperierfluidkreislauf 2.

Wie bereits erwähnt, ist die erfindungsgemäße Vorrichtung in jeder der Systemauslegungen der Fig. 1 und 2 auch zur Beheizung der Werkzeugform 1 geeignet. Zum einen kann hierzu, wie bereits erwähnt, die Bypassleitung 20 gemäß Fig. 3 dienen. Zusätzlich oder alternativ kann eine direkte aktive Beheizung des Temperierfluids und/oder des Vermittlungsfluids durch geeignete, z.B. elektrische Heizeinrichtungen vorgesehen sein. Fig. 3 zeigt hierzu die Ausrüstung des Vorlaufabschnitts 2c mit der elektrischen Heizeinrichtung 30 mit integriertem Temperatursensor 31.

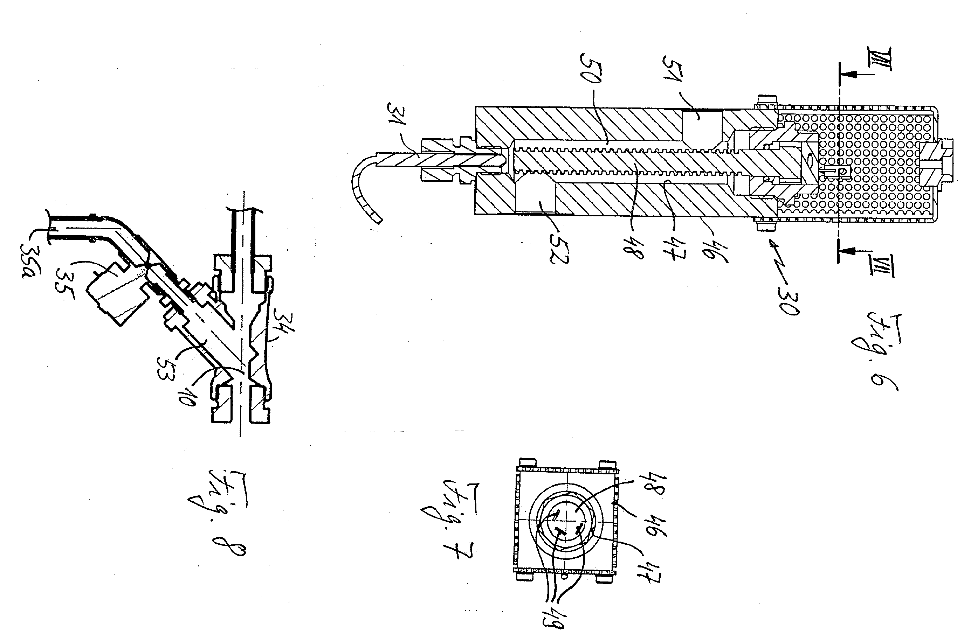

Die Fig. 6 und 7 veranschaulichen diese Heizeinrichtung 30 in einem Längsschnitt bzw. einem Querschnitt. Wie daraus ersichtlich, beinhaltet die Heizeinrichtung 30 einen zylindrischen Heizregisterblock 46 mit einer zylindrischen Mittenbohrung 47, in die ein keramischer Heizstab 48 eingesetzt ist. Der Heizstab 48 ist als Drei-Phasen-Heizstab ausgeführt und kann daher mit elektrischem Dreiphasenstrom gespeist werden. In Fig. 7 sind die zugehörigen elektrischen Anschlüsse 49 zu erkennen. An seinem Außenumfang ist der Heizstab vorzugsweise profiliert, um so die Kontaktfläche mit dem zu beheizenden Temperierfluid zu vergrößern. Im gezeigten Beispiel ist eine schraubenlinienförmige Profilierung gewählt.

Der Außendurchmesser des Keramikheizstabs 48 ist um ein vorgebbares Maß geringer gewählt als der Innendurchmesser der Bohrung 47, so dass dazwischen ein Ringspalt 50 gebildet ist, der als Wärmeübertragungskanal fungiert, der vom Temperierfluid durchströmt werden kann und in welchem dann das Temperierfluid Wärme vom Heizstab 48 aufnimmt. An gegenüberliegenden Endbereichen des Ringkanals 50 sind dementsprechend je eine Querbohrung 51, 52 in den Heizregisterblock 46 eingebracht, von denen die eine als Einlass und die andere als Auslass zur Zuführung des Temperierfluids in bzw. zur Abführung desselben aus dem Ringkanal 50 dient. Alternativ zu dem gezeigten Ringkanal 50 kann ein schraubenlinienförmiger Kanal im Heizregisterblock 46 ausgebildet sein, durch den das Temperierfluid in einer Schraubenlinie um den Keramikheizstab 48 herum vom Einlass zum Auslass hindurchströmt. Dies verlängert gegenüber dem Ringkanal 50 den Strömungsweg des Temperierfluids entlang des Heizstabs 48 und erhöht dadurch die Wärmeübertragungseffektivität, ohne die Baugröße der Heizeinrichtung 30 zu erhöhen.

Fig. 8 zeigt detaillierter den in der Rücklaufleitung 10 von Fig. 3 angeordneten Schmutzfilter 34 mit zugehörigem Spülabzweig 35a, in dem sich das zugehörige Spülventil 35 befindet. Der Filter 34 beinhaltet ein hohlzylindrisches, perforiertes Filterelement 53, das im schräg aus dem Rücklaufleitungspfad 10 ausmündenden Spülzweig 35a so angeordnet ist, dass es mit einem offenen Stirnende in die Rücklaufleitung 10 zuflussseitig hineinragt. Das Temperierfluid gelangt so durch die offene Stirnseite in das zylindrische Filtersieb 53 und verlässt dieses umfangsseitig zur Weiterleitung in der Rückführleitung 10. Im Temperierfluid möglicherweise enthaltene Schmutzpartikel werden vom Filtersieb 53 zurückgehalten und können über den Spülabzweig 35a abgeführt werden.

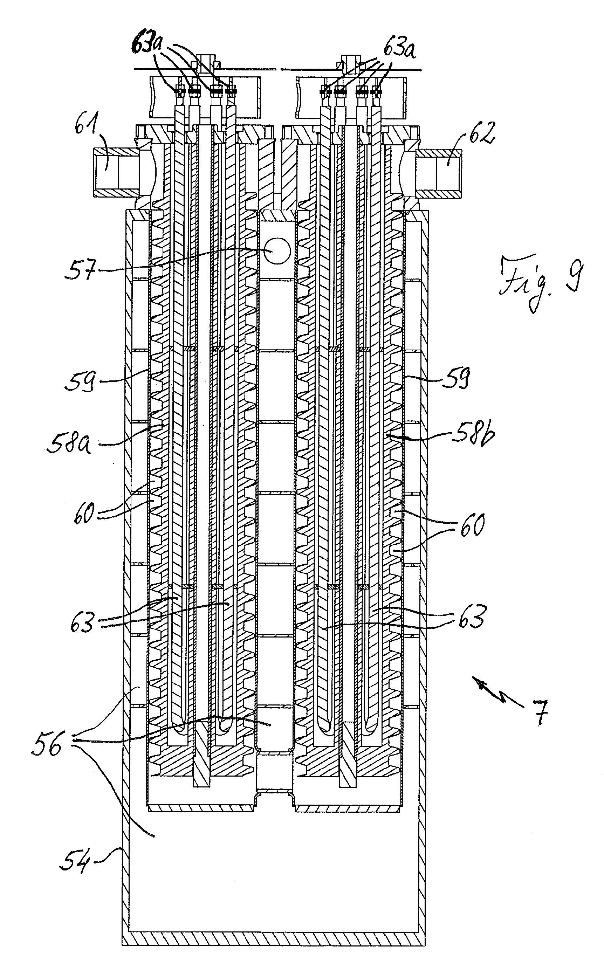

Fig. 9 veranschaulicht ein vorteilhaftes Ausführungsbeispiel für den Temperierfluid/Vermittlungsfluid-Wärmetauscher 7. In dieser Ausführung definiert dieser Wärmetauscher 7 innerhalb eines zylindrischen Gehäuses 54 einen Temperierfluidraum 56, in den im oberen Bereich ein Temperierfluideinlass 57 mündet und aus dem in einem unteren Bereich ein in Fig. 9 nicht zu erkennender Temperierfluidauslass mündet. In den Temperierfluidraum 56 sind von einer oberen Stirnseite des Gehäuses 54 her zwei zylindrische Einsätze 58a, 58b eingesetzt und gehalten, die jeweils eine geschlossene Zylindermantelfläche 59 aufweisen, an die sich innenseitig eine schraubenlinienförmige Strömungskanalstruktur 60 für das Vermittlungsfluid anschließt. Das Vermittlungsfluid kann über einen Einlass 61 parallel den Strömungskanalstrukturen 60 der beiden Einsätze 58a, 58b zugeführt und über einen Auslass 62 parallel aus selbigen wieder abgeführt werden. Somit steht das Vermittlungsfluid in den schraubenlinienförmigen Strömungskanalstrukturen 60 mit dem Temperierfluid im Temperierfluidraum 56 über die Zylindermantelflächen 59 in Wärmeübertragungskontakt. Der gezeigte, trapezförmige Querschnitt der schraubenlinienförmigen Strömungskanalstrukturen 60 mit zur Zylindermantelfläche 59 hin größer werdender Breite trägt zu einer hohen Wärmeübertragungseffizienz bei. Ein solcher trapezförmiger Querschnitt kann z.B. auch für die erwähnte alternative schraubenlinienförmige Temperierfluid-Strömungskanalstruktur der Heizeinrichtung 30 der Fig. 6 und 7 vorgesehen sein.

Des Weiteren ist in den Wärmetauscher 7 in der Ausführung von Fig. 9 eine elektrische Heizeinrichtung integriert. Dazu sind in einen Ringspalt der zylindrischen Einsätze 58a, 58b innerhalb der Vermittlungsfluid-Strömungskanalstruktur 60 und strömungstechnisch gegenüber dieser abgeschlossen mehrere Heizstäbe 63 in Umfangsrichtung verteilt angeordnet. Die Heizstäbe 63 ragen an einer oberen Stirnseite des Gehäuses 54 aus diesem mit elektrischen Anschlussenden 63a heraus, über die sie an einen entsprechenden elektrischen Heizkreis angeschlossen werden können. Mit dieser in den Temperierabschnitt-Wärmetauscher 7 integrierten elektrischen Heizeinrichtung 63 kann das die Kanalstruktur 60 durchströmende Vermittlungsfluid bei Bedarf aktiv und direkt aufgeheizt werden.

Mit der erfindungsgemäßen Temperiervorrichtung, zu der vorteilhafte Systemausführungen unter Bezugnahme auf die Fig. 1 bis 9 oben erläutert sind, lässt sich eine Werkzeugform, wie die in den Ausführungsbeispielen betrachtete Werkzeugform bzw. Gießform 1, auf sehr vorteilhafte Weise temperieren. Dies umfasst sowohl ein energiesparendes Aufheizen als auch ein effektives Kühlen mit optionaler automatischer Selbstreinigung über den erwähnten Filter 30. Auf vorteilhafte Betriebsabläufe wird nachstehend unter beispielhafter Bezugnahme auf eine in den Fig. 10 und 11 gezeigte Gießform 1' als zu temperierende Werkzeugform eingegangen.

Zunächst wird der Temperierkreislauf 2 bis zu einem vorgebbaren Teilfüllungsgrad mit Temperierfluid befüllt. Ein erforderliches Entlüften kann über entsprechende Ventile erfolgen. Häufig ist z.B. vor einem Gießvorgang einer die Gießform 1' enthaltenden Gießmaschine ein anfängliches Aufheizen der Gießform 1' gewünscht, insbesondere einer von dieser definierten Kavität 64. Dazu wird bei Verwendung einer Temperiervorrichtung gemäß Fig. 3 je nach Bedarf die Temperierfluid-Heizeinrichtung 30, die Vermittlungsfluid-Heizeinrichtung 63 und/oder die Bypassleitung 20 mit dem Bypass-Wärmetauscher 22 aktiviert, um das Temperierfluid und/oder, falls vorhanden, das Vermittlungsfluid aufzuheizen, das dann seinerseits die Gießform erwärmt. Fig. 10 veranschaulicht, wie auf diese Weise im Fall einer Systemauslegung gemäß Fig. 1 heißes Temperierfluid 65, z.B. Wasser, an einer Eintrittsseite 66a in eine Temperierkanalstruktur 66 der Gießform 1' eintritt und die Temperierkanalstruktur 66 durchströmt, wodurch die Kavität 64 aufgeheizt wird. In einem rücklaufseitigen Teil 66b der Werkzeugform-Temperierkanalstruktur 66 liegt das Temperierfluid je nach den Druckverhältnissen als Flüssigkeits-/Dampfgemisch 65a vor. Während der Aufheizphase eventuell entstehender, überschüssiger Druck im Temperierkreislauf 2 und/oder im Vermittlungsfluidkreislauf 6 kann in einer üblichen Weise abgeleitet werden.

Im laufenden Gießbetrieb wird typischerweise eine Kühlung der Gießform 1' gewünscht. Wenn Wasser als Temperierfluid verwendet wird und die Gießform 1' auf eine Temperatur unterhalb von 100°C gehalten werden soll, wird die erfindungsgemäße Vorrichtung in der Betriebsart mit Unterdruck-Siedekühlung betrieben. Dazu wird die Vakuumpumpe 4 aktiviert, die den Rücklaufabschnitt 2d und den Temperierabschnitt 2b des Temperierfluidkreislaufs 2 evakuiert, z.B. auf einen Unterdruck von ca. 2mbar bis 10mbar, wie auf ca. 5mbar. Das Durchflusssteuerventil 3, 28 wird so gesteuert, dass das Temperierfluid den Temperierfluidkreislauf 2 und speziell dessen Temperierabschnitt 2b nur mit einem vorgegebenen Teilfüllungsgrad partiell füllt. So findet in der Gießform 1'durch das deren Temperierkanalstruktur 66 teilbefüllt durchströmende Temperierfluid eine effektive Unterdruck-Siedekühlung statt. Fig. 11 veranschaulicht diese Betriebssituation, in welcher flüssiges Temperierfluid unter Teilfüllung des eintrittsseitigen Querschnitts der Temperierkanalstruktur 66 in die Temperierkanalstruktur 66 eintritt und in dieser unter Aufnahme von Wärme der Gießform 1' verdampft wird, während es entlang der Temperierkanalstruktur 66 strömt. Im rücklaufseitigen Teil 66b der Gießform-Temperierkanalstruktur 66 liegt dann das Temperierfluid teilweise oder vollständig als dampfförmiges Temperierfluid 66b vor, wie in Fig. 11 veranschaulicht. Durch das Verdampfen des Temperierfluids wird in gewünschter Weise der Kavität 64 bzw. dem darin erzeugten Gussteil Wärme entzogen. Durch den im Temperierkanalstruktur 66 herrschenden Unterdruck erfolgt die Dampfumwandlung des Wassers bereits bei einer Temperatur unterhalb von 100°C.

Im Fall der Systemauslegung von Fig. 2 erfolgt die Unterdruck-Siedekühlung im Temperierfluid/Vermittlungsfluid-Wärmetauscher 7 in analoger Weise wie bei der Systemauslegung von Fig. 1 in der Gießform 1'. Dazu tritt das Temperierfluid, wie Wasser, flüssig unter Teilfüllung des Temperierfluidraums 56 in selbigen ein und wird dort verdampft, wodurch es dem Vermittlungsfluid in der Strömungskanalstruktur 60 Wärme entzieht. Das hierdurch effektiv gekühlte Vermittlungsfluid, wie das Temperieröl, kühlt dann unter Durchströmung der Temperierkanalstruktur 66 die Gießform 1'.

Die erfindungsgemäße Vorrichtung ermöglicht des Weiteren bei Bedarf eine Kühlung der Werkzeugform 1 auf einen Temperatur-Sollwert von über 100°C. Die Vakuumpumpe 4 kann in diesem Fall abgeschaltet bleiben. Es wird wiederum ein gewünschter Teilfüllungsgrad des Temperierfluidkreislaufs 2 mit dem Temperierfluid eingestellt, der eine Siedekühlung ermöglicht, und das Temperierfluid wird wie im Fall der Unterdruck-Siedekühlung und im Fall der Beheizung vorzugsweise unter Zuhilfenahme der Umlaufpumpe 24 im Temperierfluidkreislauf 2 zirkuliert. Die Zirkulation des Temperierfluids im Temperaturfluidkreislauf 2 wird bei der Siedekühlung auch durch die Ausdehnung des Temperierfluids beim Übergang vom flüssigen Zustand in den Dampfzustand bewirkt bzw. unterstützt. Da in diesem Anwendungsfall der einzuhaltende Temperaturwert für die Werkzeugform 1 bzw. die Gießform 1' über 100°C liegt, braucht bei Verwendung von Wasser als Temperaturfluid kein Unterdruck im Temperierkreislauf 2 eingestellt werden, um die Siedekühlung zu bewirken.

Der bei der Siedekühlung, unabhängig ob bei Unterdruck oder ohne Unterdruck, entstehende Temperierfluiddampf wird nach Austritt aus der zu kühlenden Werkzeug-Gießform 1, 1' bzw. aus dem Wärmetauscher 7 über den Rücklaufabschnitt 2d zum Wärmeregenerierabschnitt 2a des Temperierfluidkreislaufs 2 zurückgeführt und dort wieder verflüssigt, um dann in flüssiger Form wieder in den Vorlaufabschnitt 2c eingespeist zu werden. Die Anlagensteuerung beinhaltet unter anderem die Berücksichtigung der Ausgangssignale der diversen Druck- und Temperatursensoren, um die diversen Ventile geeignet anzusteuern, wie sich dies für den Fachmann versteht. Die in Fig. 3 gezeigte, mehrstufige Auslegung der Wärmeregeneriereinheit 5 mit mehreren seriellen Wärmetauschern 5a, 5b wirkt sich vorteilhaft auf die Wärmeregenerierleistung des Wärmeregenerierabschnitts 2a aus. Dabei ist der vorlaufseitige Wärmetauscher 5b vorzugsweise kleiner ausgeführt als der rücklaufseitige Wärmetauscher 5a, und die zugeordnete Temperierfluidstrecke 16 kann vorteilhaft Teil eines weiteren Temperierfluidkreislaufs, wie eines geschlossenen oder offenen Kühlwasserkreislaufs, sein.

Wenngleich in den gezeigten Ausführungsbeispielen hauptsächlich auf eine Gießform als zu temperierende Werkzeugform Bezug genommen wurde, versteht sich für den Fachmann, dass die erfindungsgemäße Vorrichtung und das mit ihr ausführbare, erfindungsgemäße Verfahren in gleicher Weise zur Temperierung anderer Werkzeugformen geeignet sind.

## Patentansprüche

1. Vorrichtung zur Temperierung einer Werkzeugform, insbesondere einer Gießform, mit
- einem geschlossenen Temperierfluidkreislauf (2) mit einem Wärmeregenerierabschnitt (2a) zur externen Wärmeabgabe oder Wärmeaufnahme eines im Temperierfluidkreislauf geführten Temperierfluids, einem Temperierabschnitt (2b), in welchem das Temperierfluid in Wärmeübertragungskontakt mit der Werkzeugform (1) oder mit einem Vermittlungsfluid eines Vermittlungsfluidkreislaufs (6) steht, der wärmeübertragend mit der Werkzeugform gekoppelt ist, einem vom Wärmeregenerierabschnitt zum Temperierabschnitt führenden Vorlaufabschnitt (2c) und einem vom Temperierabschnitt zum Wärmeregenerierabschnitt führenden Rücklaufabschnitt (2d),
**dadurch gekennzeichnet, dass**
- der Temperierfluidkreislauf (2) zur Kühlung der Werkzeugform (1) mittels Unterdruck-Siedekühlung im Temperierabschnitt (2b) eingerichtet ist, wobei
- Teilfüllungs- und Unterdruckerzeugungsmittel (3, 4) vorgesehen sind, die zur Bereitstellung einer Temperierfluid-Teilfüllung und eines Unterdrucks im Temperierabschnitt eingerichtet sind.

2. Temperiervorrichtung nach Anspruch 1, weiter **dadurch gekennzeichnet, dass** die Teilfüllungs- und Unterdruckerzeugungsmittel ein Durchflusssteuerventil (3, 28) im Vorlaufabschnitt und/oder eine Vakuumpumpe (4) beinhalten, die an den Rücklaufabschnitt oder an einen rücklaufseitigen Teil des Wärmeregenerierabschnitts angekoppelt ist.

3. Temperiervorrichtung nach Anspruch 2, weiter **gekennzeichnet durch** eine Umlaufpumpe (24), die stromaufwärts des Durchflusssteuerventils im Vorlaufabschnitt angeordnet ist.

4. Temperiervorrichtung nach einem der Ansprüche 1 bis 3, weiter **dadurch gekennzeichnet, dass** der Wärmeregenerierabschnitt einen Wärmetauscher (5a) mit einem Sensor (45) zur Überwachung eines Maximalfüllstands (M) aufweist, unter dessen Niveau ein vorlaufseitiger Wärmetauscherteil (44a) liegt, aus dem der Vorlaufabschnitt ausmündet, und über dessen Niveau ein rücklaufseitiger Wärmetauscherteil (44b) liegt, in den der Rücklaufabschnitt einmündet.

5. Temperiervorrichtung nach einem der Ansprüche 1 bis 4, weiter **dadurch gekennzeichnet, dass** der Temperierabschnitt eine Temperierkanalstruktur (66) in der Werkzeugform beinhaltet, wobei die Teilfüllungs- und Unterdruckerzeugungsmittel zur Teilfüllung der Werkzeugform-Temperierkanalstruktur eingerichtet sind.

6. Temperiervorrichtung nach einem der Ansprüche 1 bis 4, weiter **dadurch gekennzeichnet, dass** der Temperierabschnitt einen Wärmetauscher (7) aufweist, über den der Temperierfluidkreislauf und der Vermittlungsfluidkreislauf wärmeübertragend gekoppelt sind.

7. Temperiervorrichtung nach einem der Ansprüche 1 bis 6, weiter **gekennzeichnet durch** einen im Rücklaufabschnitt angeordneten Filter (34).

8. Temperiervorrichtung nach einem der Ansprüche 1 bis 7, weiter **gekennzeichnet durch** eine Vermittlungsfluid-Heizeinrichtung (63) für das Vermittlungsfluid.

9. Temperiervorrichtung nach Anspruch 8, weiter **dadurch gekennzeichnet, dass** die Vermittlungsfluid-Heizeinrichtung in den Temperierabschnitt-Wärmetauscher integriert ist.

10. Temperiervorrichtung nach einem der Ansprüche 1 bis 7, weiter **gekennzeichnet durch** eine im Vorlaufabschnitt angeordnete Temperierfluid-Heizeinrichtung (30).

11. Temperiervorrichtung nach Anspruch 10, weiter **dadurch gekennzeichnet, dass** die Temperierfluid-Heizeinrichtung stromabwärts des Durchflusssteuerventils angeordnet ist.

12. Temperiervorrichtung nach einem der Ansprüche 8 bis 11, weiter **dadurch gekennzeichnet, dass** die Vermittlungsfluid-Heizeinrichtung oder die Temperierfluid-Heizeinrichtung mindestens einen langgestreckten Keramikheizstab (48) aufweist, der von einem zylinderringförmigen oder schraubenlinienförmigen Fluidkanal (50) umgeben ist.

13. Temperiervorrichtung nach Anspruch 12, weiter **dadurch gekennzeichnet, dass** der Keramikheizstab als ein mit elektrischem Dreiphasenstrom gespeister Drei-Phasen-Heizstab ausgeführt ist.

14. Temperiervorrichtung nach einem der Ansprüche 1 bis 13, weiter **dadurch gekennzeichnet, dass** das Temperierfluid Wasser ist und/oder das Vermittlungsfluid ein Temperieröl ist.

15. Verfahren zur Temperierung einer Werkzeugform, insbesondere einer Gießform, unter Verwendung einer Temperiervorrichtung nach einem der Ansprüche 1 bis 14, wobei das Temperierverfahren eine Kühlbetriebsart mit Unterdruck-Siedekühlung im Temperierabschnitt des Temperierkreislaufs der Temperiervorrichtung umfasst.
